# FASCICULE DE BREVET EUROPEEN

(11) **EP 1 481 581 B1**
(45) Date de publication et mention de la délivrance du brevet: **22.09.2010**
(21) Numéro de dépôt: 04290951.5
(22) Date de dépôt: 09.04.2004
(51) Int. Cl.: A01D 34/535

(54) **Dispositif de fixation de fléau pour appareil de broyage ou de fauche**
Befestigungselement für einen Schlegel für eine Dresch- oder Mähmaschine
Fastening element for the flail of a threshing or mowing maschine

(30) Priorité: 28.05.2003 FR 0306467
(43) Date de publication de la demande: 01.12.2004
(73) Titulaire: Noremat, 54710 Ludres (FR)
(72) Inventeur: Bachmann, Jacques, 54550 Maizières (FR)
(74) Mandataire: Boutin, Antoine

(56) Documents cités:
- EP-A- 1 297 737
- FR-A- 2 651 087
- FR-A- 2 804 577
- GB-A- 895 159
- US-A- 3 527 038

## Description

Dans le brevet n° 00.01409 déposé par la demanderesse le 4 février 2000, on a décrit un procédé d'accrochage de fléaux pour appareils de broyage ou de fauche, ainsi que des moyens pour la mise en oeuvre de ce procédé.

Le procédé ainsi décrit consiste à munir chaque fléau d'un crochet venant s'accrocher sur une manille, la partie centrale dudit crochet ayant pratiquement la même forme que la partie inférieure de ladite manille et ayant une ouverture rétrécie de façon à ne pas pouvoir se décrocher de la manille, celle-ci comportant sur un de ses côtés une partie amincie permettant d'insérer ledit crochet dans ladite manille.

La présente invention a pour objet un perfectionnement audit brevet n° 00.01409.

Il s'est en effet avéré, à l'usage, que, du fait des efforts considérables appliqués par la force centrifuge aux manilles d'accrochage des fléaux, il se produisait des déformations de ces dernières et même, parfois des ruptures dans la partie amincie.

La présente invention a pour objet d'éliminer cet inconvénient en donnant à la manille du brevet n° 00.01409 une forme spécialement étudiée pour éviter toute déformation ou rupture.

A titre d'exemple et pour faciliter la compréhension de l'invention, on a représenté aux dessins annexés :
- Figure 1, une vue en perspective de la manille connue ;
- Figure 2, une vue en perspective de la manille perfectionnée, objet de l'invention ;
- Figure 3, une vue en plan de la figure 2.

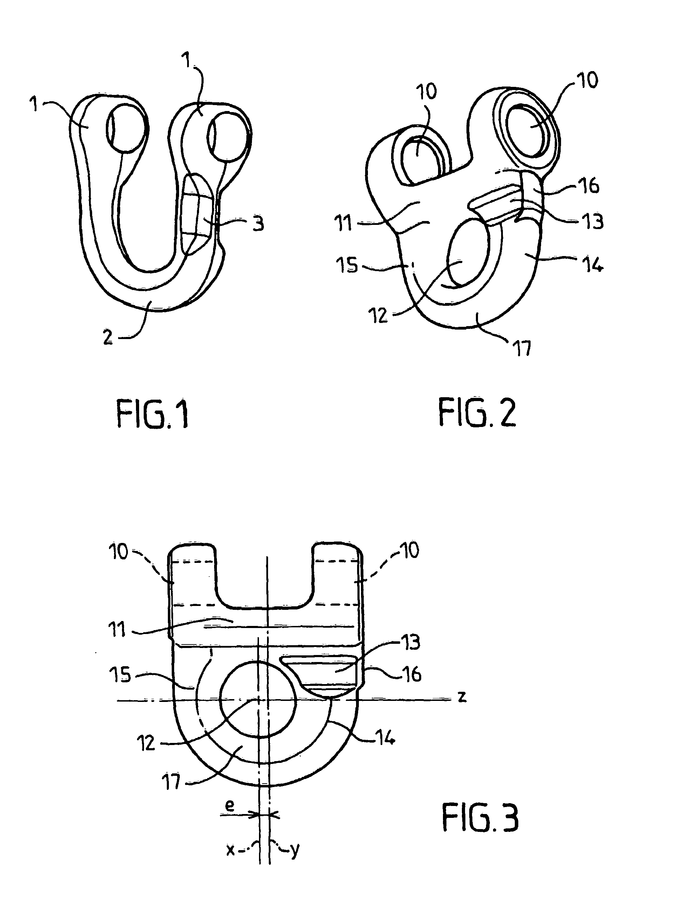

En se reportant à la figure 1, on voit que la manille décrite au brevet n° 00.01409 est en forme de U, comportant à chaque extrémité des deux branches du U un oeilleton 1, destiné à recevoir un axe de fixation. La partie inférieure travaillante 2 du U est arrondie et a une forme correspondant à celle du crochet d'un fléau.

Comme cela a été décrit dans le brevet susmentionné, l'une des branches latérales du U comporte un amincissement 3 permettant d'introduire dans le U le fléau (non représenté) dont l'ouverture est plus petite que la partie 2.

Cet amincissement 3 crée une zone de moindre résistance de la manille ; de sorte que la branche du U comportant cet amincissement risque de se déformer, de s'étirer et même de se rompre.

Le problème à résoudre est donc d'avoir toujours un amincissement de l'épaisseur d'une des branches de la manille, mais en disposant sur cette branche des moyens de renforcement qui compensent les effets dudit amincissement.

Les figures 2 et 3 illustrent ces divers moyens.

Les deux branches du U sont reliées l'une à l'autre par une entretoise, 11 située juste au-dessous des deux oeilletons 10.

Il en résulte que la manille comporte un anneau 12 en dessous de l'entretoise 11.

Sur la figure 3 on voit que cet anneau 12 est déporté latéralement par rapport à l'axe de symétrie "y" de la manille. Cela a pour effet que le côté 14 de l'anneau 12 a une plus grande épaisseur que le côté 15.

Sur la figure 3 le déport entre l'axe "x" de l'anneau 12 et l'axe "y" est indiqué par la référence "e".

Le côté 14 de l'anneau comporte un amincissement 13, qui joue le même rôle que l'amincissement 3 de la figure 1.

Cependant, ce rétrécissement est disposé au-dessus de l'axe horizontal "z" de l'anneau : et cela a pour effet qu'il est pratiqué dans une zone où il y a le plus de matière.

De plus, à hauteur du rétrécissement 13, la largeur du côté 14 est encore augmentée par la présence d'un bossage 16.

Comme cela est décrit dans le brevet n° 00.01409, la partie inférieure 17 de l'anneau 12 (correspondant à la partie 2 de la figure 1) a une forme correspondant à celle du crochet du fléau.

Par ces divers moyens on arrive à avoir autant de métal dans la partie 14 où est pratiqué l'amincissement 13, que dans l'autre partie 15 de l'anneau et tous les inconvénients cités ci-dessus sont éliminés.

## Revendications

1. Dispositif d'accrochage d'un fléau de broyage ou de fauche, du type comportant une manille dont la partie inférieure, travaillante a une forme correspondant à celle du crochet d'accrochage du fléau et dont une des branches comporte un amincissement (13) permettant d'introduire l'ouverture dudit crochet, **caractérisé par le fait que** ladite manille comporte dans la partie (14) où est pratiqué l'amincissement (13) des moyens de renforcement qui compensent l'effet d'affaiblissement provoqué par ledit amincissement.

2. Dispositif selon la revendication 1, dans lequel un moyen de renforcement est constitué par une entretoise (11) reliant les deux parties latérales (14 et 15) de la manille, située au-dessous des oeilletons (10) de fixation ; de façon à ménager un anneau (12).

3. Dispositif selon la revendication 1, dans lequel un moyen de renforcement est constitué par le fait que la partie inférieure travaillante est déportée latéralement d'une distance (e) par rapport à l'axe de symétrie (y) de la manille ; de sorte que la partie latérale (14) de la manille dans laquelle est pratiqué l'amincissement (13) est plus large que l'autre (15).

4. Dispositif selon la revendication 1, dans lequel un moyen de renforcement est constitué par le fait que l'amincissement (13) est pratiqué au-dessus de l'axe horizontal médian (z) de la partie inférieure travaillante, dans une zone où il y a plus de matière.

5. Dispositif selon la revendication 1, dans lequel un moyen de renforcement est constitué par un bossage (16) pratiqué sur le côté (14) de façon à augmenter la largeur de ce côté à l'endroit où est pratiqué l'amincissement (13).

6. Dispositif selon la revendication 1 comportant au moins deux moyens de renforcement distincts pris dans l'ensemble des moyens de renforcement des revendications 2 à 5.

## Claims

1. A fastening device for a shredding or mowing flail, of the type including a clevis whereof the lower, working portion has a shape corresponding to that of the fastening hook of the flail and one of the branches of which comprises a thinning (13) making it possible to introduce the opening of said hook, **characterized in that** said clevis includes, in the portion (14) where the thinning (13) is formed, strengthening means that offset the weakening effect caused by said thinning.

2. The device according to claim 1, wherein a strengthening means is formed by a bridge (11) connecting the two side portions (14 and 15) of the clevis, situated below threaded eyelets (10) so as to form a ring (12).

3. The device according to claim 1, wherein a strengthening means is formed by the fact that the lower working portion is laterally offset by a distance (e) relative to the axis of symmetry (y) of the clevis, such that the side portion (14) of the clevis in which the thinning (13) is formed is wider than the other (15).

4. The device according to claim 1, wherein a strengthening means is formed by the fact that the thinning (13) is formed above the median horizontal axis (z) of the lower working portion, in a zone where there is more material.

5. The device according to claim 1, wherein a strengthening means is formed by a boss (16) formed on the side (14) so as to increase the width of that side at the location where the thinning (13) is formed.

6. The device according to claim 1 including at least two distinct strengthening means taken from the set of the strengthening means of claims 2 to 5.

## Patentansprüche

1. Vorrichtung zur Befestigung eines Schlegels für eine Dresch- oder Mähmaschine der Bauart, die einen Schäkel umfasst, dessen unterer, arbeitender Abschnitt eine Form hat, die der des Befestigungshakens eines Schlegels entspricht und vom dem einer der Arme eine Verschlankung (13) aufweist, die es erlaubt, die Öffnung des Hakens einzuführen, **dadurch gekennzeichnet, dass** der Schäkel in dem Abschnitt (14), wo die Verschlankung eingearbeitet ist, Verstärkungsmittel umfasst, die die abschwächende Wirkung, die von der Verschlankung (13) hervorgerufen wird, kompensieren.

2. Vorrichtung nach Anspruch 1, bei der ein Verstärkungsmittel von einem Steg (11) gebildet wird, der die zwei seitlichen Abschnitte (14 und 15) des unter den Befestigungsösen (10) befindlichen Schäkels verbindet, so dass ein Ring (12) ausgebildet wird.

3. Vorrichtung nach Anspruch 1, bei der ein Verstärkungsmittel **dadurch** gebildet wird, dass der untere arbeitende Abschnitt seitlich um einen Abstand (e) im Verhältnis zur Symmetrieachse (y) des Schäkels versetzt ist, so dass der seitliche Abschnitt (14) des Schäkels, in den die Verschlankung (13) eingearbeitet ist, breiter als der andere (15) ist.

4. Vorrichtung nach Anspruch 1, bei der ein Verstärkungsmittel **dadurch** gebildet wird, dass die Verschlankung (13) über der horizontalen Mittelachse (z) des unteren arbeitenden Abschnitts eingearbeitet ist in einen Bereich, wo es mehr Material gibt.

5. Vorrichtung nach Anspruch 1, bei der ein Verstärkungsmittel von einer Wulst (16) gebildet wird, die derart auf der Seite (14) aufgearbeitet ist, dass die Breite dieser Seite an der Stelle erhöht wird, an der die Verschlankung (13) eingearbeitet ist.

6. Vorrichtung nach Anspruch 1, die mindestens zwei unterschiedliche Verstärkungsmittel aufweist, die zu den Verstärkungsmitteln der Ansprüche 2 bis 5 gehören.
